# EUROPEAN PATENT SPECIFICATION

(11) **EP 1 597 830 B1**
(45) Date of publication and mention of the grant of the patent: **01.10.2008**
(21) Application number: 03783446.2
(22) Date of filing: 13.11.2003
(51) Int. Cl.: G08B 27/00

(54) **METHODS FOR CONTROLLING APPARATUSES HAVING AN EMERGENCY ALERT FUNCTION**
VERFAHREN ZUR STEUERUNG VON VORRICHTUNGEN MIT NOTALARM-FUNKTION
PROCEDES DE COMMANDE D'APPAREILS POSSEDANT UNE FONCTION D'ALERTE

(30) Priority: 15.11.2002 US 426644 P; 15.11.2002 US 426645 P; 15.11.2002 US 426951 P
(43) Date of publication of application: 23.11.2005
(73) Proprietor: Thomson Licensing, 92100 Boulogne-Billancourt (FR)
(72) Inventor: KENDALL, Scott, Allan, Lexington, KY 40509 (US); MERRELL, John, Douglas, Snohomish, WA 98206 (US); KWAN, Sai, Kiat, 609434 Singapore (SG); BRIDGE, Michael, Alan, Noblesville, IN 46060 (US)
(74) Representative: Rossmanith, Manfred
(86) International application number: PCT/US2003/036332
(87) International publication number: WO 2004/047422

(56) References cited:
- EP-A2- 0 763 942
- EP-A2- 1 143 394
- US-A- 5 574 999
- US-A1- 2002 118 118
- US-B1- 6 204 761

## Description

The present invention generally relates to apparatuses such as television signal receivers, radios or other apparatuses having an emergency alert function, and more particularly, to various techniques for controlling such apparatuses which improve the overall performance of the emergency alert function.

Emergency events such as severe weather, natural disasters, fires, civil emergencies, war acts, toxic chemical spills, radiation leaks, or other such conditions can be devastating to unprepared individuals. With weather-related emergencies, authorities such as the National Weather Service (NWS) and the National Oceanographic and Atmospheric Administration (NOAA) are generally able to detect severe weather conditions prior to the general public. Through the use of modern weather detection devices, such as Doppler radar and weather satellites, the NWS and NOAA are able to issue early warnings of severe weather conditions which have saved many lives. However, for such warnings to be effective, they must be communicated to their intended recipients.

Certain apparatuses are capable of receiving emergency alert signals provided by sources such as the NWS and NOAA, and provide an emergency alert function using Specific Area Message Encoding (SAME) technology. Apparatuses using SAME technology typically require a user to perform a setup process for the emergency alert function by selecting items such as a frequency channel which is monitored in order to receive emergency alert signals, one or more geographical areas of interest, and one or more types of emergency events which activate the emergency alert function. Once the setup process is complete, the emergency alert function may be activated when incoming emergency alert signals including SAME data indicate the occurrence of an emergency event which corresponds to the geographical area(s) and types of emergency event selected by the user during the setup process. When the emergency alert function is activated, an alert output such as an audio message may be provided to alert individuals of the emergency event.

With apparatuses using technology such as SAME technology, the selection of a frequency channel for receiving emergency alert signals can be problematic. For example, current apparatuses allow a user to manually select one of 7 different NWS frequency channels. In general, a user will attempt to select the frequency channel that provides the highest signal strength. However, the task of selecting the frequency channel that provides the highest signal strength may introduce the possibility of error since the user is required to discriminate among multiple low-wattage signal strength transmissions. Moreover, a selected frequency channel may not provide all of the information that a user desires. For example, if a user wants to receive alert information for a geographical area which is not covered by the selected frequency channel, then the user will not receive the desired alert information.

Certain apparatuses may use an alternative processing procedure, wherein the apparatus interprets test signals. If a test signal is not received, the apparatus may display a warning message that the user should, "Check OP." However, this approach is problematic since the causes for the warning messages are varied, and may require considerable unaided diagnosis on the part of the user.

Other apparatuses may ask a user for his or her geographical location. Such apparatuses may include memory for storing information regarding all of the transmitters serving all geographical areas. Once the user indicates his or her geographical location, the apparatus uses the stored transmitter information to select the frequency channel that serves the user's area. This approach works well as long as the stored transmitter information is current and up-to-date. However, NOAA is rapidly adding new transmitters, and may also change the frequency channels used by certain existing transmitters. Since such apparatuses may have no means by which to update their information, they may not select the best frequency channel. Accordingly, there is a need for an improved technique for enabling users to select a frequency channel for the reception of emergency alert signals.

Another problem associated with apparatuses using technology such as SAME technology is the inability of users to modify and/or add location and/or event codes associated with the emergency alert function of the apparatus. As previously indicated herein, apparatuses using SAME technology typically require a user to perform a setup process for the emergency alert function by selecting items including one or more geographical areas of interest, and one or more types of emergency events which activate the emergency alert function. Such geographical areas and emergency events are typically represented by location codes and event codes, respectively. In the future, it is likely that new location and/or event codes will be added. Under such circumstances, if the location and event codes are pre- programmed into an apparatus, and there is no ability to modify existing codes or add new codes, then the apparatus may not respond to emergency situations in the manner desired by users. Accordingly, there is a need for a technique which enables users to modify and/or add location and/or event codes associated with the emergency alert function of an apparatus.

Still another problem associated with apparatuses using technology such as SAME technology is the inability of users to receive accurate information regarding emergency events that occurred while they were away from home. For example, a user returning from an out-of-town trip may want to receive accurate details about an emergency event that occurred during his/her absence. Accordingly, there is a need for a technique which enables users to receive accurate information regarding emergency events that occurred while they were away from home.

US-B1-6 204 761 teaches a system wherein a carrier frequency is tested for the presence of a modulated signal. If the modulated signal is below a predetermined threshold for a predetermined period of time, the system determines that no alert information is being sent and switches to a different frequency. In the known system a SAME receiver will only switch into alarm mode when the emergency broadcast signal contains a SAME digital location code matching the pre-programmed code.

The present invention described herein provides various techniques for controlling apparatuses having an emergency alert function, and addresses the foregoing and other issues.

In accordance with an aspect of the present invention, a method for controlling an apparatus having an emergency alert function is disclosed. According to an exemplary embodiment, the method comprises steps of automatically tuning a plurality of frequency channels associated with the emergency alert function to identify one of the frequency channels having higher signal strength relative to the other frequency channels, and using the identified frequency channel to receive emergency alert signals capable of activating the emergency alert function.

In accordance with another aspect of the present invention, an apparatus having an emergency alert function is disclosed. According to an exemplary embodiment, the apparatus comprises tuning means for tuning a plurality of frequency channels associated with said emergency alert function. Processing means are provided for identifying one of the frequency channels having higher signal strength relative to the other frequency channels.

In accordance with yet another aspect of the present invention, a television signal receiver having an emergency alert function is disclosed. According to an exemplary embodiment, the television signal receiver comprises a tuner operative to tune a plurality of frequency channels associated with the emergency alert function. A processor is operative to identify one of the frequency channels having higher signal strength relative to the other frequency channels.

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is an exemplary environment suitable for implementing the present invention;
FIG. 2 is a block diagram of a television signal receiver according to an exemplary embodiment of the present invention;
FIG. 3 is a flowchart illustrating exemplary steps according to one aspect of the present invention;
FIG. 4 is a flowchart illustrating exemplary steps according to another aspect of the present invention;
FIGS. 5 to 9 are flowcharts illustrating further exemplary details of the steps of FIG. 4;
FIGS. 10 to 13 are exemplary displays suitable for use when practicing the aspect of the present invention represented in FIGS. 4 to 9;
FIG. 14 is a flowchart illustrating exemplary steps according to still another aspect of the present invention;
FIGS. 15 to 18 are exemplary displays suitable for use when practicing the aspect of the present invention represented in FIG. 14;
FIG. 19 is a flowchart illustrating exemplary steps according to yet another aspect of the present invention; and
FIGS. 20 to 21 are exemplary displays suitable for use when practicing the aspect of the present invention represented in FIG. 19.

The exemplifications set out herein illustrate preferred embodiments of the invention, and such exemplifications are not to be construed as limiting the scope of the invention in any manner.

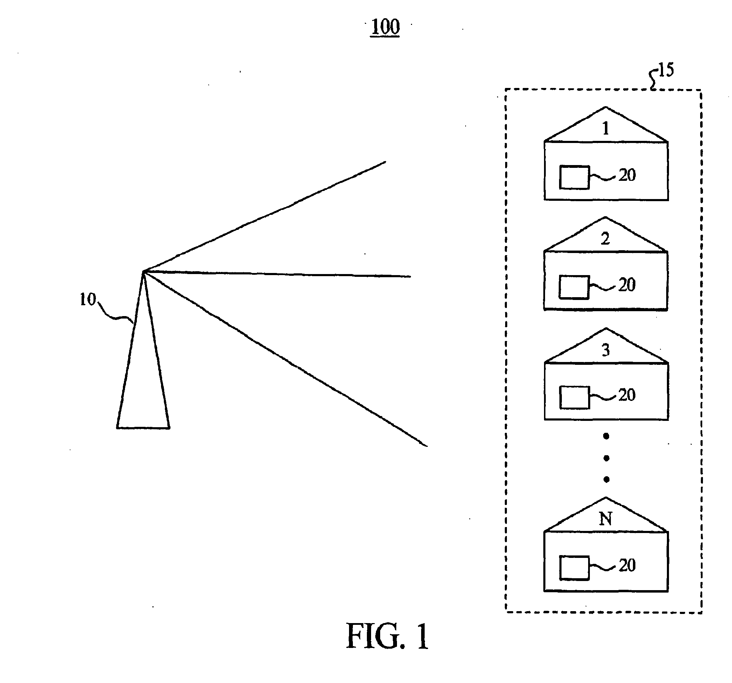

Referring now to the drawings, and more particularly to FIG. 1, an exemplary environment 100 suitable for implementing the present invention is shown. In FIG. 1, environment 100 comprises signal transmission means such as signal transmission source 10, dwelling means such as dwelling units 15 (i.e., 1, 2, 3 ... N, where N may be any positive integer), and signal receiving means such as television signal receivers 20.

In FIG. 1, dwelling units 15 may represent residences, businesses and/or other dwelling places located within a particular geographical area, such as but not limited to, a particular continent, country, region, state, area code, zip code, city, county, municipality, subdivision, and/or other definable geographical area. According to an exemplary embodiment, each of the dwelling units 15 is equipped with at least one television signal receiver 20 having an emergency alert function. According to the present invention, the emergency alert function enables, among other things, television signal receiver 20 to receive emergency alert signals and provide one or more alert outputs to notify individuals of an emergency event. For purposes of example, the present invention will be described herein with reference to television signal receiver 20. However, the principles of the present invention may also be used by other apparatuses, such as radios.

According to an exemplary embodiment, signal transmission source 10 transmits signals including audio, video and/or emergency alert signals which may be received by each television signal receiver 20. According to an exemplary embodiment, the emergency alert signals may be provided from an authority such as the NWS, or other authorities such as governmental entities or the like. Signal transmission source 10 may transmit the emergency alert signals in their original form as provided by the authority, or may append digital data representative of the emergency alert signals to other data, or may modify the emergency alert signals in some manner appropriate for its specific transmission format needs. In response to the emergency alert signals, each television signal receiver 20 may provide one or more alert outputs to thereby notify individuals of the emergency event. Signal transmission source 10 may transmit signals to television signal receivers 20 via any wired or wireless link such as, but not limited to, terrestrial, cable, satellite, fiber optic, digital subscriber line (DSL), and/or any other type of broadcast and/or multicast means.

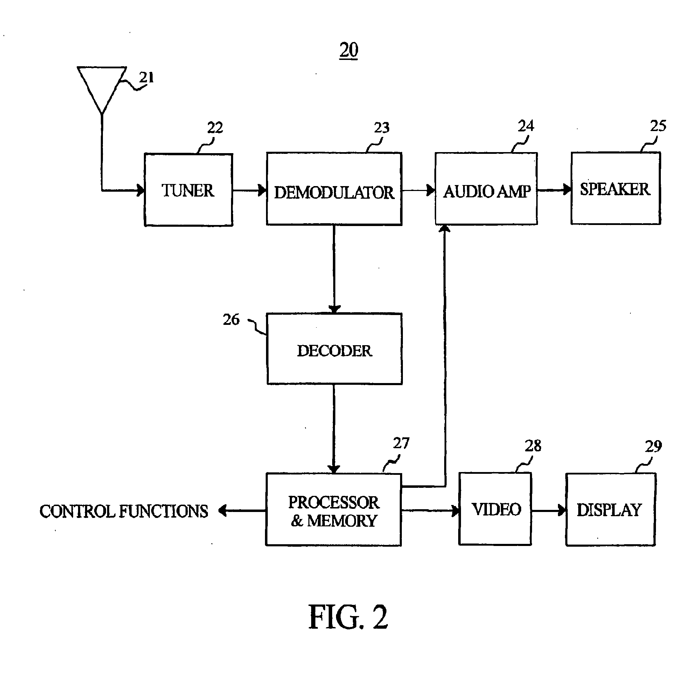

Referring to FIG. 2, a block diagram of an exemplary embodiment of television signal receiver 20 of FIG. 1 is shown. In FIG. 2, television signal receiver 20 comprises signal receiving means such as signal receiving element 21, tuning means such as tuner 22, demodulation means such as demodulator 23, audio amplification means such as audio amplifier 24, audio output means such as speaker 25, decoding means such as decoder 26, processing means and memory means such as processor and memory 27, video processing means such as video processor 28, and visual output means such as display 29. Some of the foregoing elements may for example be embodied using integrated circuits (ICs). For clarity of description, certain conventional elements of television signal receiver 20 including control signals may not be shown in FIG. 2.

Signal receiving element 21 is operative to receive signals including audio, video and/or emergency alert signals from signal sources, such as signal transmission source 10 in FIG. 1. According to an exemplary embodiment, received audio signals may include digitally encoded emergency alert signals. According to another exemplary embodiment, emergency alert signals may be received as separate data packets in a digital transmission system. Signal receiving element 21 may be embodied as any signal receiving element such as an antenna, input terminal or other element.

Tuner 22 is operative to tune signals including audio, video and/or emergency alert signals. According to an exemplary embodiment, tuner 22 may be capable of tuning audio signals on at least the following designated NWS frequencies: 162.400 MHz, 162.425 MHz, 162.450 MHz, 162.475 MHz, 162.500 MHz, 162.525 MHz and 162.550 MHz. As previously indicated herein, such audio signals may include digitally encoded emergency alert signals. Tuner 22 may also tune other frequency channels including those used in terrestrial, cable, satellite and/or other transmissions.

Demodulator 23 is operative to demodulate signals provided from tuner 22, and may demodulate signals in analog and/or digital transmission formats. According to an exemplary embodiment, demodulator 23 demodulates audio signals to thereby generate demodulated audio signals representing audio content such as an NWS audio message, a warning alert tone and/or other audio content. Audio amplifier 24 is operative to amplify the audio signals output from demodulator 23 responsive to one or more control signals provided from processor 27. Speaker 25 is operative to aurally output the amplified audio signals provided from audio amplifier 24.

Decoder 26 is operative to decode signals including audio, video and/or emergency alert signals. According to an exemplary embodiment, decoder 26 decodes audio signals to thereby extract digitally encoded frequency shift keyed (FSK) signals, which represent emergency alert signals indicating an emergency event. According to another exemplary embodiment, decoder 27 decodes digital data which represents emergency alert signals indicating an emergency event. Decoder 27 may also perform other decoding functions, such as decoding data which represents emergency alert signals included in the vertical blanking interval (VBI) of an analog television signal.

According to an exemplary embodiment, the emergency alert signals include data comprising SAME data associated with the emergency event. SAME data comprises a digital code representing information such as the specific geographical area affected by the emergency event, the type of emergency event (e.g., tornado watch, radiological hazard warning, civil emergency, etc.), and the expiration time of the event alert. SAME data is used by the NWS and other authorities to improve the specificity of emergency alerts and to decrease the frequency of false alerts. Other data and information may also be included in the emergency alert signals according to the present invention.

Processor and memory 27 are operative to perform various processing and data storage functions of television signal receiver 20. According to an exemplary embodiment, processor 27 receives the emergency alert signals from decoder 26 and determines whether the emergency alert function of television signal receiver 20 is activated based on data included in the emergency alert signals. According to this exemplary embodiment, processor 27 compares data in the emergency alert signals to user setup data stored in memory 27 to determine whether the emergency alert function is activated. As will be described later herein, a setup process for the emergency alert function of television signal receiver 20 allows a user to select items such as an applicable geographical area(s), and type(s) of emergency events (e.g., tornado watch, radiological hazard warning, civil emergency, etc.) which activate the emergency alert function.

When the emergency alert function of television signal receiver 20 is activated, processor 27 outputs one or more control signals which enable various operations. According to an exemplary embodiment, such control signals enable one or more alert outputs (e.g., aural and/or visual) to thereby notify individuals of the emergency event. Such control signals may also enable other operations of television signal receiver 20, such as causing it to be switched from an off/standby mode to an on mode.

Processor 27 is also operative to enable various other operations associated with the emergency alert function of television signal receiver 20. For example, processor 27 enables an auto-tune mode of the emergency alert function which provides a convenient means by which users can select a frequency channel for receiving emergency alert signals. Processor 27 also enables other operations such as enabling users to modify and/or add location and/or event codes associated with the emergency alert function, and/or enabling users to receive accurate information regarding emergency events that occurred while they were away from home. Further details regarding these aspects of the present invention will be provided later herein.

Video processor 28 is operative to process signals including video signals. According to an exemplary embodiment, such video signals may include embedded messages such as NWS text messages and/or other messages that provide details regarding emergency events. Video processor 28 may include closed caption circuitry which enables closed caption displays. Display 29 is operative to provide visual displays corresponding to processed signals provided from video processor 28. According to an exemplary embodiment, display 29 may provide visual displays including the aforementioned messages that provide details regarding emergency events.

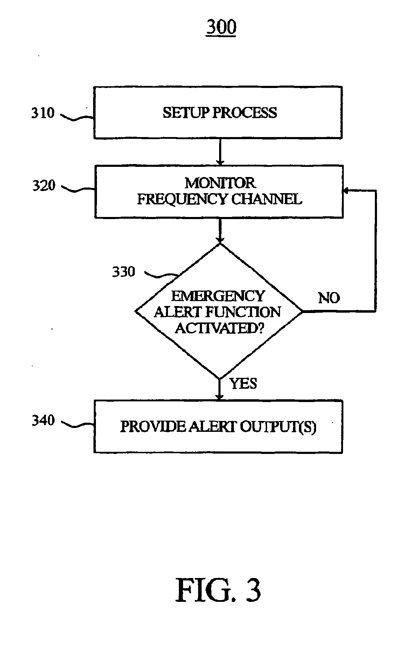

Turning now to FIG. 3, a flowchart 300 illustrating exemplary steps according to one aspect of the present invention is shown. In particular, FIG. 3 generally illustrates the operation of the emergency alert function according to an exemplary embodiment of the present invention. For purposes of example and explanation, the steps of FIG. 3 will be described with reference to television signal receiver 20 of FIG. 2. The steps of FIG. 3 are merely exemplary, and are not intended to limit the present invention in any manner.

At step 310, a setup process for the emergency alert function of television signal receiver 20 is performed. According to an exemplary embodiment, a user performs this setup process by providing inputs to television signal receiver 20 (e.g., using a remote control device not shown) responsive to an on-screen menu displayed via display 29. Such an on-screen menu may for example be part of an electronic program guide (EPG) function of television signal receiver 20. According to an exemplary embodiment, the user may select at least the following items during the setup process at step 310:
A. Enable/Disable - The user may select whether to enable or disable the emergency alert function.
B. Frequency Channel - The user may select the frequency channel which is monitored in order to receive emergency alert signals. For example, the user may select a frequency such as one of the following NWS transmission frequencies: 162.400 MHz, 162.425 MHz, 162.450 MHz, 162.475 MHz, 162.500 MHz, 162.525 MHz and 162.550 MHz. As will be discussed later herein, a frequency channel may be manually selected by the user, or may be selected using an auto-tune mode which automatically tunes all of the frequency channels associated with the emergency alert function to thereby identify one or more frequency channels that provide the highest signal strength.
C. Geographical Areas - The user may select one or more geographical areas of interest. For example, the user may select a particular continent, country, region, state, area code, zip code, city, county, municipality, subdivision, and/or other definable geographical area. As will be discussed later herein, such geographical area(s) may be represented by location codes, such as Federal Information Processing Standard (FIPS) location codes.
D. Event Types - The user may select one or more types of emergency events which activate the emergency alert function. For example, the user may designate that events such as civil emergencies, radiological hazard warnings, and/or tornado warnings activate the emergency alert function, but that events such as a thunderstorm watch does not, etc. The user may also select whether the conventional warning audio tone provided by the NWS and/or other alert mechanism activates the emergency alert function. According to the present invention, different severity or alert levels (e.g., statement, watch, warning, etc.) may represent different "events." For example, a thunderstorm watch may be considered a different event from a thunderstorm warning. As will be discussed later herein, emergency events may be represented by event codes.
E. Alert Outputs - The user may select one or more alert outputs to be provided when the emergency alert function is activated. According to an exemplary embodiment, the user may select visual and/or aural outputs to be provided for each type of emergency event that activates the emergency alert function. For example, the user may select to display a visual message (e.g., an NWS text message as a closed caption display) and/or tune television signal receiver 20 to a specific channel. The user may also for example select to aurally output a warning tone (e.g., chime, siren, etc.) and/or an audio message (e.g., NWS audio message), and the desired volume of each. Moreover, the alert outputs may be selected on an event-by-event basis. Other types of alert outputs may also be provided according to the present invention.

According to the present invention, other menu selections may also be provided at step 310 and/or some of the menu selections described above may be omitted. Data corresponding to the user's selections during the setup process of step 310 is stored in memory 27.

At step 320, television signal receiver 20 monitors the frequency selected by the user during the setup process of step 310 (i.e., item B) for emergency alert signals. According to an exemplary embodiment, tuner 22 monitors the selected frequency and thereby receives incoming emergency alert signals. According to the present invention, television signal receiver 20 is capable of monitoring a frequency and receiving emergency alert signals during all modes of operation, including for example when television signal receiver 20 is turned on, turned off, and/or during playback of recorded audio and/or video content.

At step 330, a determination is made as to whether the emergency alert function of television signal receiver 20 is activated. According to an exemplary embodiment, processor 27 makes this determination by comparing data included in the incoming emergency alert signals to data stored in memory 27. As previously indicated herein, the emergency alert signals may include data such as SAME data which represents information including the type of emergency event (e.g., tornado watch, radiological hazard warning, civil emergency, etc.) and the specific geographical area(s) affected by the emergency event. According to an exemplary embodiment, processor 27 compares this SAME data to corresponding user setup data (i.e., items C and D of step 310) stored in memory 27 to thereby determine whether the emergency alert function is activated. In this manner, the emergency alert function of television signal receiver 20 is activated when the emergency event indicated by the emergency alert signals corresponds to: (1) the geographical area(s) selected by the user for item C of step 310 and (2) the event type(s) selected by the user for item D of step 310.

If the determination at step 330 is negative, process flow loops back to step 320 where tuner 22 continues to monitor the selected frequency channel. Alternatively, if the determination at step 330 is positive, process flow advances to step 340 where television signal receiver 20 provides one or more alert outputs to thereby notify individuals of the emergency event.

According to an exemplary embodiment, processor 27 enables the one or more alert outputs at step 340 in accordance with the user's selections during the setup process of step 310 (i.e., item E), and such alert outputs may be aural and/or visual in nature. For example, aural outputs such as a warning tone and/or an NWS audio message may be provided at step 340 via speaker 25, and the volume of such aural outputs may be controlled in accordance with the volume level set by the user during the setup process of step 310. Visual outputs may also be provided at step 340 via display 29 to notify individuals of the emergency event. According to an exemplary embodiment, an auxiliary information display such as an NWS text message (e.g., as a closed caption display) and/or a video output from a specific channel may be provided at step 340 via display 29 under the control of processor 27.

According to another exemplary embodiment, the alert output(s) provided at step 340 may be based on the severity or alert level of the particular emergency event. For example, emergency events may be classified in one of three different alert level categories, such as statement, watch, and warning. With such a classification scheme, the alert output for an emergency event at a level 1 or statement level may be provided by an unobtrusive notification means such as a blinking light emitting diode (LED) since it is the least severe type of emergency event. The alert output for an emergency event at a level 2 or watch level may have some type of audio component (e.g., radio message). The alert output for an emergency event at a level 3 or warning level may be provided by a siren or other type of alarm since it is the most severe type of emergency event. Other types of aural and/or visual alert outputs than those expressly described herein may also be provided at step 340 according to the present invention.

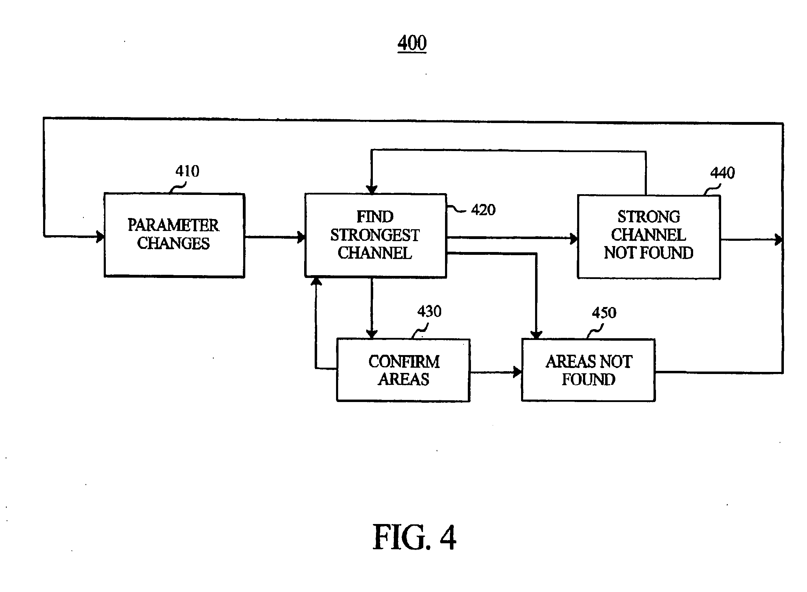

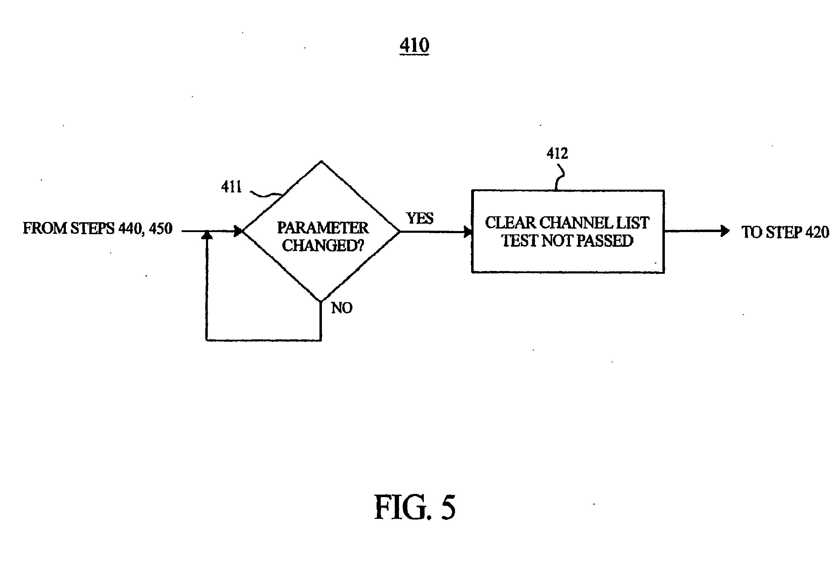

Turning now to FIG. 4, a flowchart 400 illustrating exemplary steps according to another aspect of the present invention is shown. In particular, FIG. 4 illustrates an aspect of the present invention which tests the suitability of a frequency channel used for receiving emergency alert signals. As indicated in FIG. 4, flowchart 400 includes a "parameter changes" step 410, a "find strongest channel" step 420, a "confirm areas" step 430, a "strong channel not found" step 440, and an "areas not found" step 450. Further exemplary details of steps 410 to 450 of FIG. 4 are provided in FIGS. 5 to 9, respectively. Accordingly, the steps of FIG. 4 will be described with reference to FIGS. 5 to 9. For purposes of example and explanation, the steps of FIGS. 4 to 9 will also be described with reference to television signal receiver 20 of FIG. 2. The steps of FIGS. 4 to 9 are merely exemplary, and are not intended to limit the present invention in any manner.

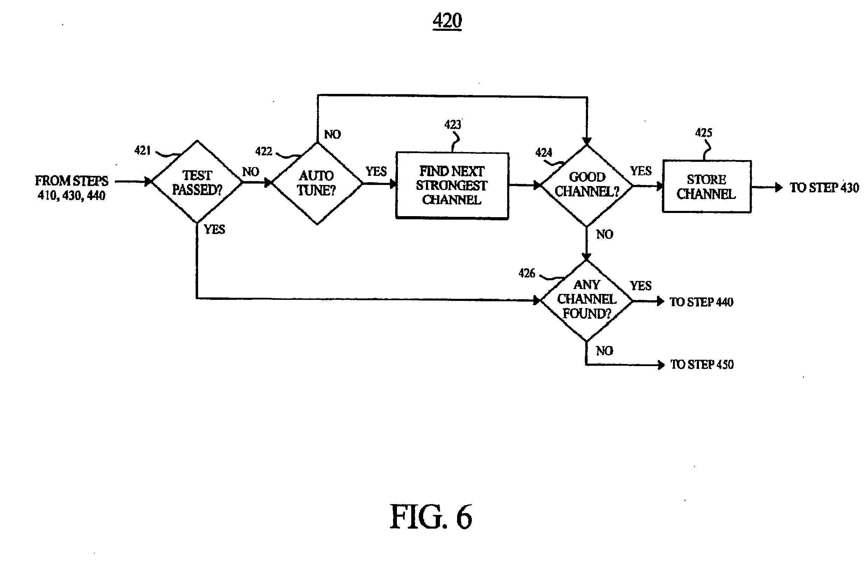

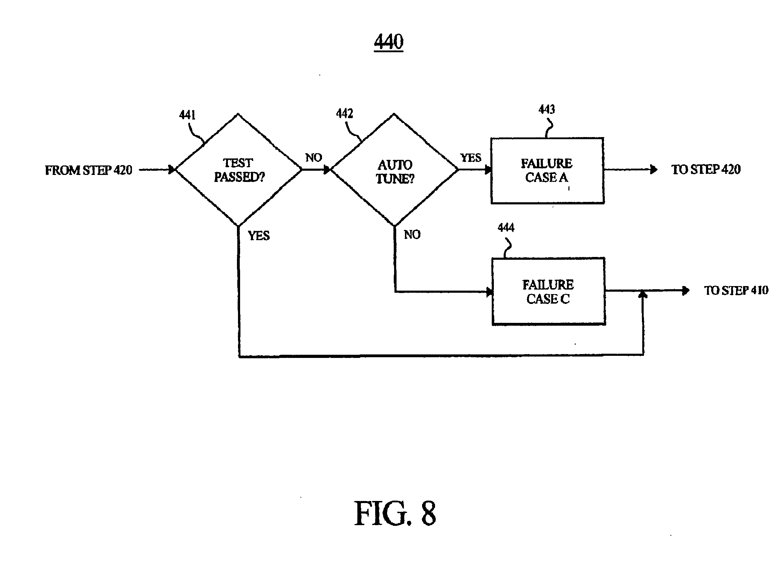

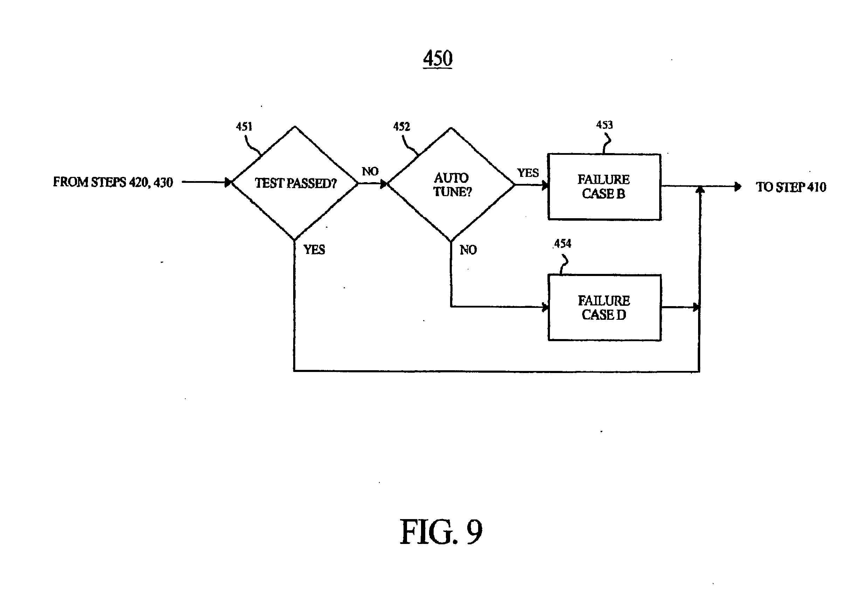

Turning now to FIG. 5, further details of step 410 of FIG. 4 are provided. At step 411, television signal receiver 20 detects when a parameter associated with the emergency alert function has changed. As indicated in FIG. 5, process flow advances to step 411 from step 440 of FIG. 8 and step 450 of FIG. 9. According to an exemplary embodiment, processor 27 detects a parameter change at step 411 when a user has changed the frequency channel used to receive emergency alert signals (i.e., item B of step 310), and/or when a user has modified and/or added one or more location codes (e.g., FIPS codes) associated with the emergency alert function (i.e., item C of step 310). When a parameter change is detected at step 411, process flow advances to step 412 where processor 27 clears the current list of frequency channels for the emergency alert function from memory 27, and sets an internal flag indicating that a test for the currently set frequency channel has not been passed. From step 412, process flow advances to step 420 of FIG. 6.

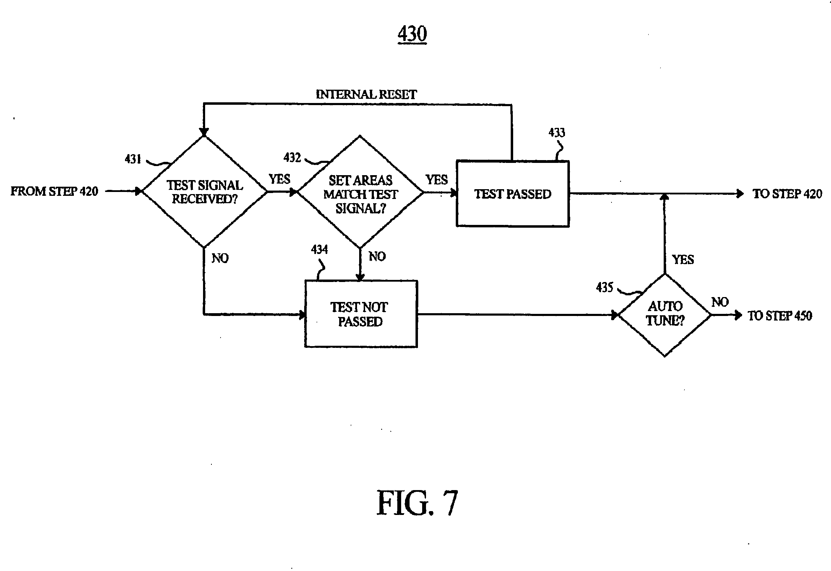

Turning now to FIG. 6, further details of step 420 of FIG. 4 are provided. At step 421, processor 27 determines whether the test for the currently set frequency channel has been passed. As indicated in FIG. 6, process flow advances to step 421 from step 410 of FIG. 5, step 430 of FIG. 7, and step 440 of FIG. 8. When the determination at step 421 is negative, process flow advances to step 422 where processor 27 determines whether television signal receiver 20 is currently set to the auto-tune mode. As previously indicated herein, the auto-tune mode is an operational mode of television signal receiver 20 which tunes all of the frequency channels associated with the emergency alert function to thereby identify the frequency channels that provide the highest signal strength.

If the determination at step 422 is positive, process flow advances to step 423 where the next strongest frequency channel is found using the auto-tune mode. According to an exemplary embodiment, processor 27 outputs one or more control signals which cause tuner 22 to scan the frequency channels associated with the emergency alert function so that the next strongest frequency channel may be identified at step 423. If the determination at step 422 is negative, or after step 423, process flow advances to step 424 where processor 27 determines whether the next strongest channel found at step 423 is a "good" channel. According to an exemplary embodiment, a channel is considered a "good" channel at step 424 if the signal strength provided by the channel exceeds a predetermined threshold which allows proper decoding of SAME data. The predetermined threshold may be set as a matter of design choice.

If the determination at step 424 is positive, process flow advances to step 425 where the "good" channel is stored in memory 27 under the control of processor 27. From step 425, process flow advances to step 430 of FIG. 7. If the determination at step 424 is negative, or if the prior determination at step 421 is positive, process flow advances to step 426 where processor 27 determines whether any frequency channel associated with the emergency alert function of television signal receiver 20 is found. If the determination at step 426 is positive, process flow advances to step 440 of FIG. 8. Alternatively, if the determination at step 426 is negative, process flow advances to step 450 of FIG. 9.

Turning now to FIG. 7, further details of step 430 of FIG. 4 are provided. At step 431, processor 27 determines whether a predetermined test signal has been received within a predetermined time period. As indicated in FIG. 7, process flow advances to step 431 from step 420 of FIG. 6. According to an exemplary embodiment, the predetermined test signal of step 431 may be part of a required weekly test (RWT) which transmits SAME data with a list of all of the location codes (e.g. FIPS codes) that a particular transmitter serves. The predetermined time period used at step 431 may be based on a one week time period, and may for example be a period of time slightly longer than one week (e.g., 9 days, etc.).

If the determination at step 431 is positive, process flow advances to step 432 where processor 27 determines whether the received test signal includes a list of location codes (e.g., FIPS codes) which match the current geographical area(s) set by the user for the emergency alert function (i.e., item C of step 310). If the determination at step 432 is positive, process flow advances to step 433 where processor 27 sets an internal flag indicating that the test for the currently set frequency channel has been passed. From step 433, process flow advances to step 420 of FIG. 6. Also at step 433, an internal reset of processor 27 may cause process flow to loop back to step 431.

If the determination at step 431 is negative, or the determination at step 432 is negative, process flow advances to step 434 where processor 27 sets an internal flag indicating that the test for the currently set frequency channel has not been passed. From step 434, process flow advances to step 435 where processor 27 determines whether television signal receiver 20 is currently set to the auto-tune mode. If the determination at step 435 is positive, process flow advances to step 420 of FIG. 6. Alternatively, if the determination at step 435 is negative, process flow advances to step 450 of FIG. 9.

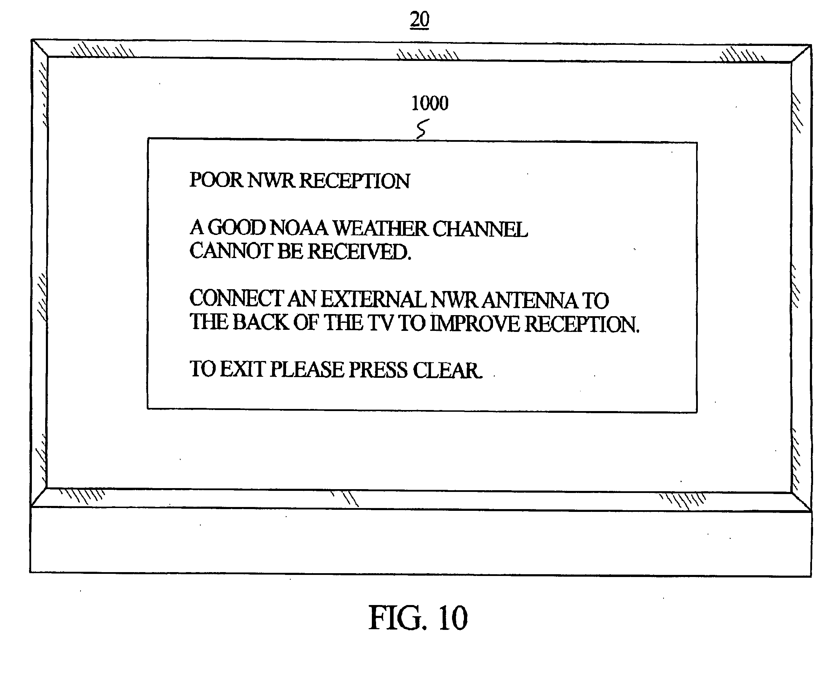

Turning now to FIG. 8, further details of step 440 of FIG. 4 are provided. At step 441, processor 27 determines whether the test for the currently set frequency channel has been passed. As indicated in FIG. 8, process flow advances to step 441 from step 420 of FIG. 6. When the determination at step 441 is negative, process flow advances to step 442 where processor 27 determines whether television signal receiver 20 is currently set to the auto-tune mode. If the determination at step 442 is positive, process flow advances to step 443 where processor 27 determines that a Case A failure exists. According to an exemplary embodiment, a Case A failure exists when television signal receiver 20 is set to the auto-tune mode, and is unable to find a frequency channel associated with the emergency alert function that provides sufficient signal strength to allow proper decoding of SAME data. When a Case A failure exists, processor 27 outputs one or more control signals to enable an output message for the user. FIG. 10 shows an example of an output message 1000 which may be used in the event of a Case A failure. As indicated in FIG. 10, exemplary output message 1000 may instruct the user to connect an external antenna to television signal receiver 20 to improve signal reception. From step 443, process flow advances to step 420 of FIG. 6.

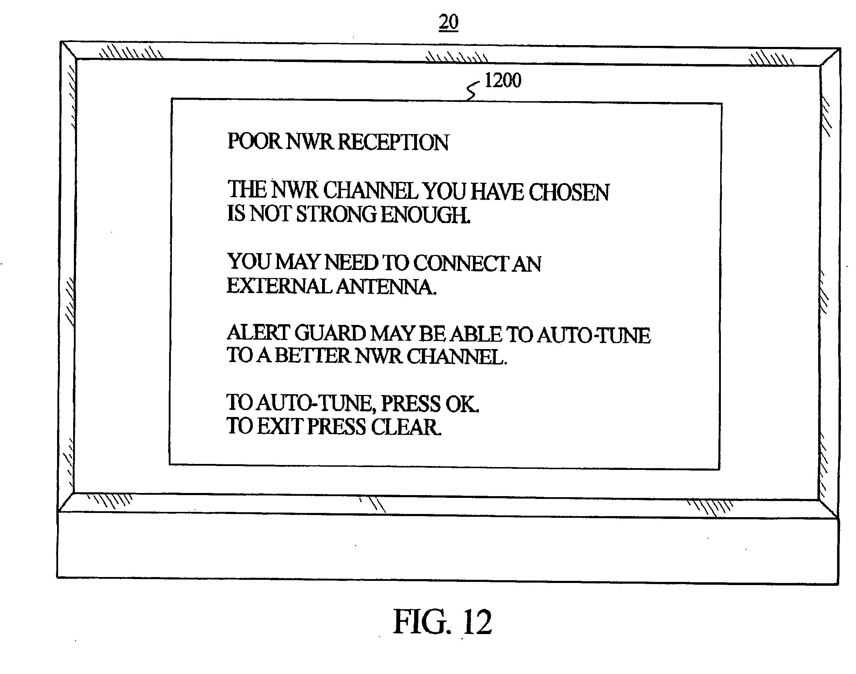

If the determination at step 442 is negative, process flow advances to step 444 where processor 27 determines that a Case C failure exists. According to an exemplary embodiment, a Case C failure exists when television signal receiver 20 is set to the manual tune mode, and the manually tuned frequency channel does not provide sufficient signal strength to allow proper decoding of SAME data. When a Case C failure exists, processor 27 outputs one or more control signals to enable an output message for the user. FIG. 12 shows an example of an output message 1200 which may be used in the event of a Case C failure. As indicated in FIG. 12, exemplary output message 1200 may instruct the user to connect an external antenna to television signal receiver 20 to improve signal reception, and/or to select another frequency channel (e.g., using auto-tune mode). From step 444, or when the determination at step 441 is positive, process flow loops back to step 410 of FIG. 5.

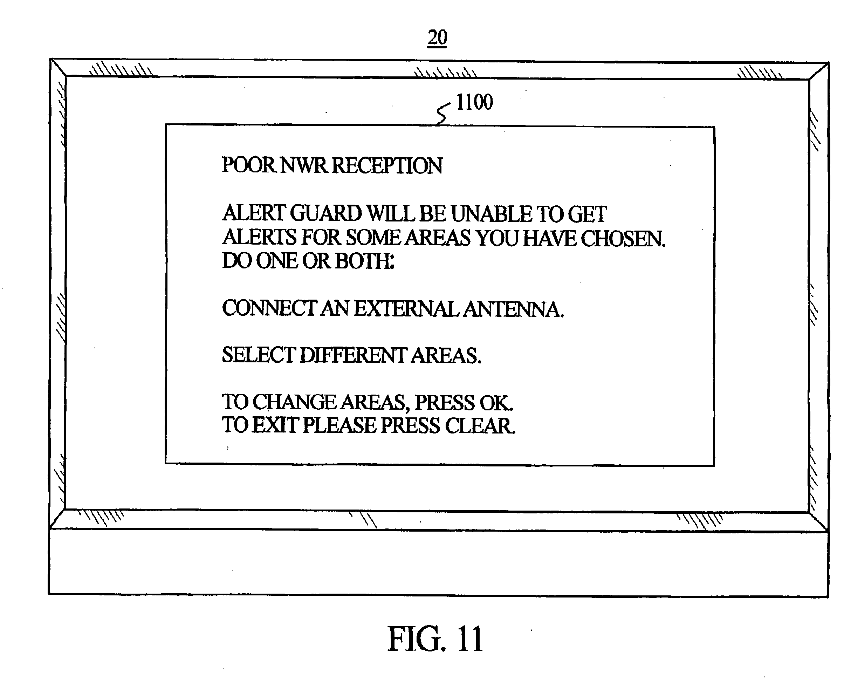

Turning now to FIG. 9, further details of step 450 of FIG. 4 are provided. At step 451, processor 27 determines whether the test for the currently set frequency channel has been passed. As indicated in FIG. 9, process flow advances to step 451 from step 420 of FIG. 6 and step 430 of FIG. 7. When the determination at step 451 is negative, process flow advances to step 452 where processor 27 determines whether television signal receiver 20 is currently set to the auto-tune mode. If the determination at step 452 is positive, process flow advances to step 453 where processor 27 determines that a Case B failure exists. According to an exemplary embodiment, a Case B failure exists when television signal receiver 20 is set to the auto-tune mode, and the received test signal did not include a list of location codes (e.g., FIPS codes) which match the current geographical area(s) set by the user for the emergency alert function (i.e., item C of step 310). When a Case B failure exists, processor 27 outputs one or more control signals to enable an output message for the user. FIG. 11 shows an example of an output message 1100 which may be used in the event of a Case B failure. As indicated in FIG. 11, exemplary output message 1100 may instruct the user to connect an external antenna to television signal receiver 20 to improve signal reception, and/or to select different geographical area(s) for the emergency alert function. From step 453, process flow loops back to step 410 of FIG. 5.

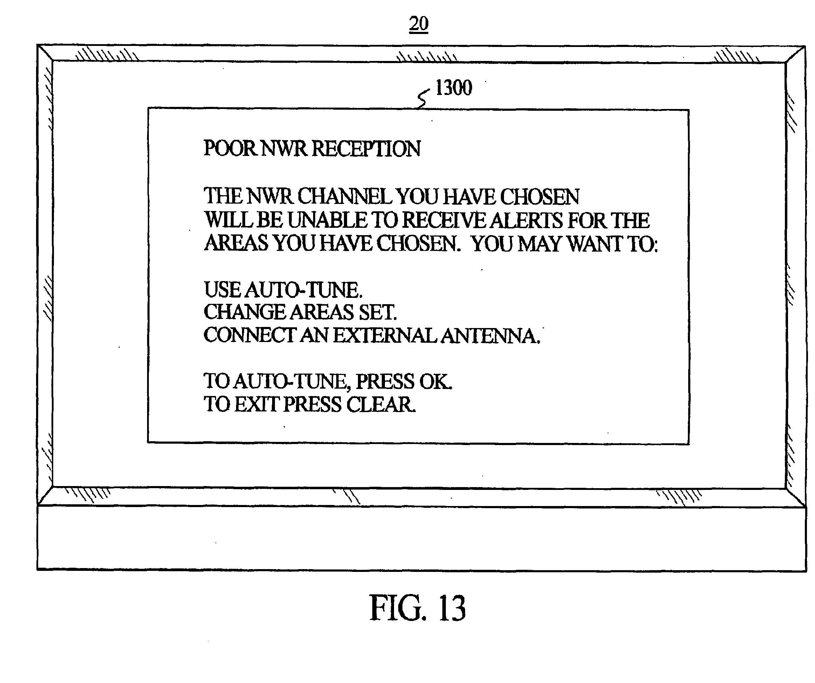

If the determination at step 452 is negative, process flow advances to step 454 where processor 27 determines that a Case D failure exists. According to an exemplary embodiment, a Case D failure exists when television signal receiver 20 is set to the manual tune mode, and the received test signal did not include a list of location codes (e.g., FIPS codes) which match the current geographical area(s) set by the user for the emergency alert function (i.e., item C of step 310). When a Case D failure exists, processor 27 outputs one or more control signals to enable an output message for the user. FIG. 13 shows an example of an output message 1300 which may be used in the event of a Case D failure. As indicated in FIG. 13, exemplary output message 1300 may instruct the user to use the auto-tune mode, select different geographical area(s) for the emergency alert function, and/or connect an external antenna to television signal receiver 20 to improve signal reception. From step 454, process flow loops back to step 410 of FIG. 5.

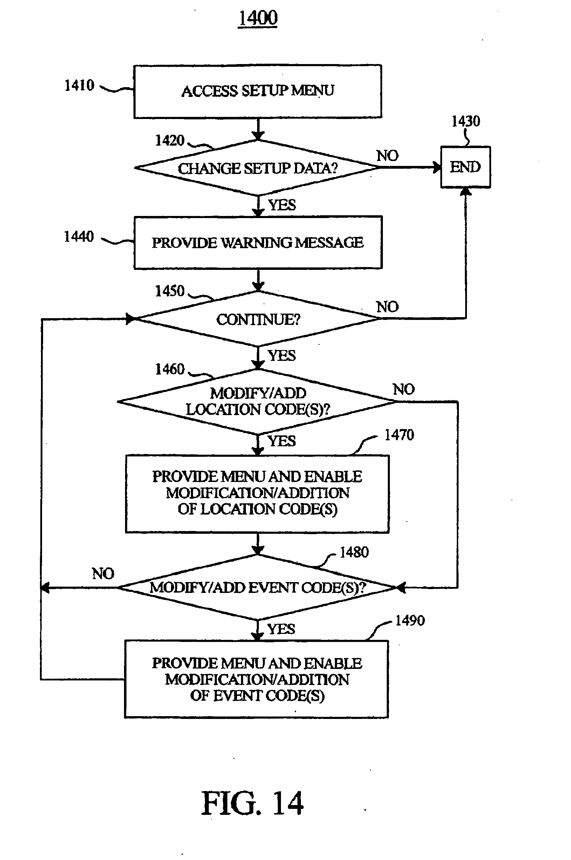

Turning now to FIG. 14, a flowchart 1400 illustrating exemplary steps according to still another aspect of the present invention is shown. In particular, FIG. 14 illustrates an aspect of the present invention in which a user may modify and/or add location codes (e.g., FIPS codes) and/or event codes associated with the emergency alert function. For purposes of example and explanation, the steps of FIG. 14 will also be described with reference to television signal receiver 20 of FIG. 2. Accordingly, the steps of FIG. 14 are enabled by processor 27. The steps of FIG. 14 are merely exemplary, and are not intended to limit the present invention in any manner.

At step 1410, a user may access a setup menu by providing inputs to television signal receiver 20 (e.g., using a remote control device). At step 1420, the setup menu provides the user with an option of whether to change setup data associated with the emergency alert function of television signal receiver 20. If the user elects not to change any setup data associated with the emergency alert function at step 1420, process flow advances to step 1430 where the process ends.

Alternatively, if the user elects to change any setup data associated with the emergency alert function at step 1420, process flow advances to step 1440 where television signal receiver 20 provides a warning message to the user. According to an exemplary embodiment, the warning message provided at step 1440 informs the user that incorrectly modifying existing location and/or event codes, and/or adding incorrect location and/or event codes may cause television signal receiver 20 to not respond correctly to emergency events in the geographical area(s) of interest. As a result, the user may be exposed to potentially dangerous conditions.

After the warning message is provided at step 1440, process flow advances to step 1450 where the user may elect whether to continue with the process of changing the setup data associated with the emergency alert function. If the user elects not to continue at step 1450, process flow loops to step 1430 where the process ends. Alternatively, if the user elects to continue at step 1450, process flow advances to step 1460 where the user may elect to modify and/or add one or more location codes associated with the emergency alert function of television signal receiver 20.

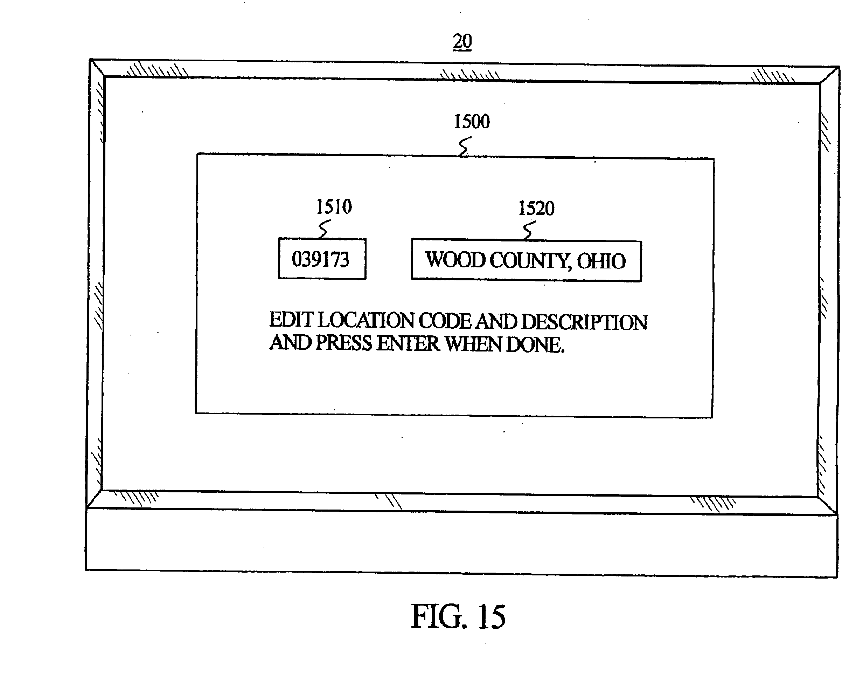

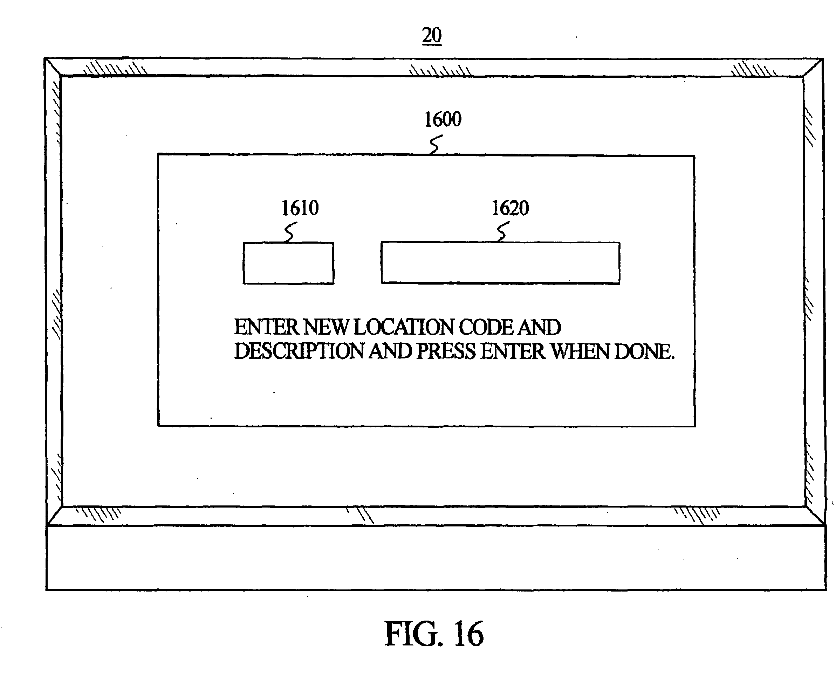

If the user elects to modify and/or add one or more location codes at step 1460, process flow advances to step 1470 where television signal receiver 20 provides an on-screen display menu via display 29, and thereby enables the user to modify and/or add one or more location codes, which according to an exemplary embodiment are FIPS codes. FIGS. 15 and 16 show exemplary menu displays which may be used at step 1470 to enable the modification and/or addition of one or more location codes.

As indicated in FIG. 15, exemplary menu display 1500 enables the user to modify an existing location code (i.e., 039173) as indicated by reference number 1510, and the corresponding location description (i.e., Wood County, Ohio) as indicated by reference number 1520. Similarly, FIG. 16 provides an exemplary menu display 1600 which enables the user to add a new location code as indicated by reference number 1610, and the corresponding location description as indicated by reference number 1620. Once the user has modified and/or added one or more location codes, the user may confirm the modifications and/or additions (e.g., by pressing enter key) and thereby cause the updated location codes to be stored in a non-volatile portion of memory 27. Table 1 below illustrates how such updated location data may be stored in memory 27.

**Table 1**

| **Memory Address** | **Location Code** | **Location Description** |
|---|---|---|
| K | 039173 | Wood County, Ohio |
| L | 139069 | Northwest Henry County, Ohio |
| M | 055555 | New Location Description |
| - | - | - |
| - | - | - |
| - | - | - |

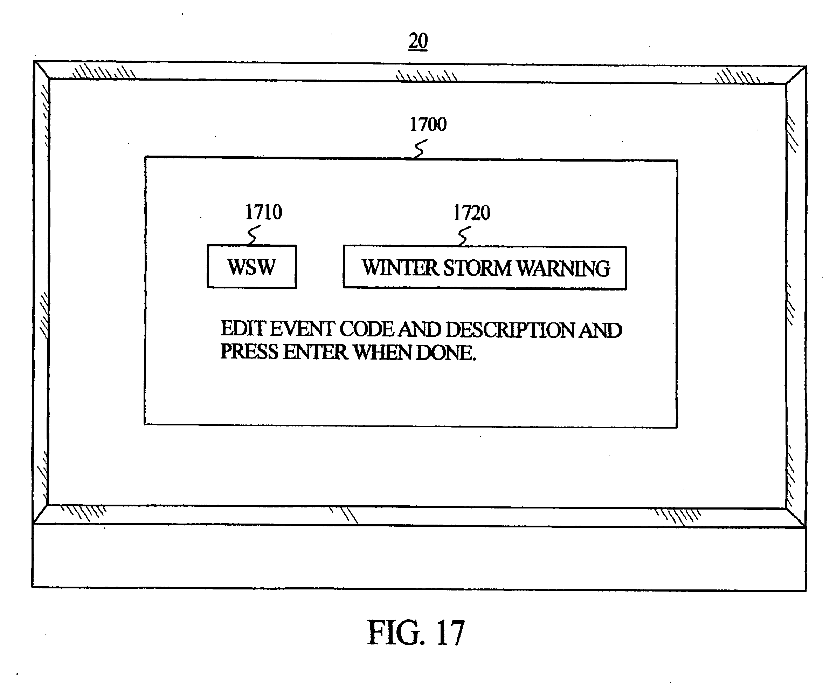

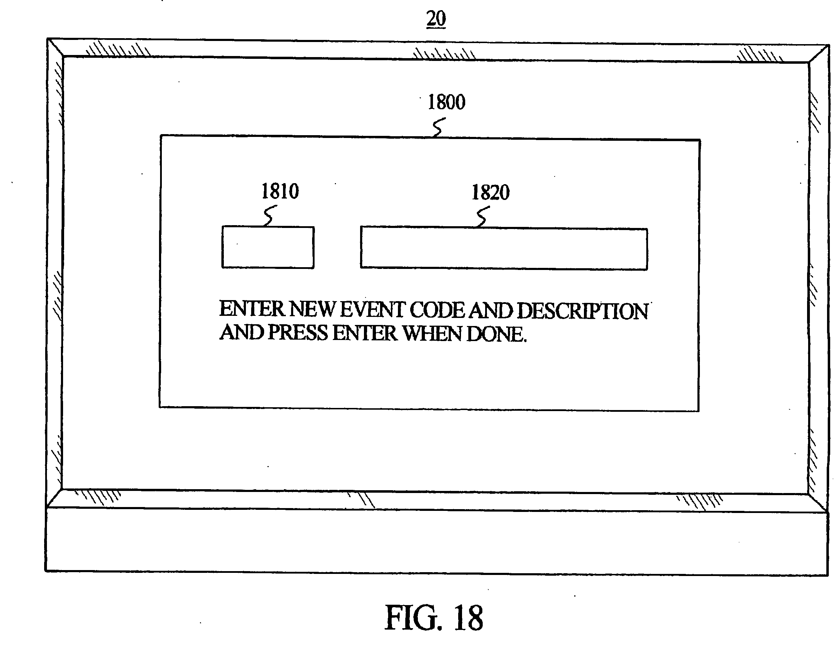

If the user elects not to modify and/or add one or more location codes at step 1460, or after step 1470, process flow advances to step 1480 where the user may elect to add and/or modify one or more event codes associated with the emergency alert function of television signal receiver 20. If the user elects to modify and/or add one or more event codes at step 1480, process flow advances to step 1490 where television signal receiver 20 provides an on-screen display menu via display 29, and thereby enables the user to modify and/or add one or more event codes. FIGS. 17 and 18 show exemplary menu displays which may be used at step 1490 to enable the modification and/or addition of one or more event codes.

As indicated in FIG. 17, exemplary menu display 1700 enables the user to modify an existing event code (i.e., WSW) as indicated by reference number 1710, and the corresponding event description (i.e., Winter Storm Warning) as indicated by reference number 1720. Similarly, FIG. 18 provides an exemplary menu display 1800 which enables the user to add a new event code as indicated by reference number 1810, and the corresponding location description as indicated by reference number 1820. Once the user has modified and/or added one or more event codes, the user may confirm the modifications and/or additions (e.g., by pressing enter key) and thereby cause the updated event codes to be stored in a non-volatile portion of memory 27. Table 2 below illustrates how such updated event data may be stored in memory 27.

**Table 2**

| **Memory Address** | **Event Code** | **Event Description** |
|---|---|---|
| R | WSW | Winter Storm Warning |
| S | TSA | Tsunami Watch |
| T | XYZ | New Event Code Description |
| - | - | - |
| - | - | - |
| - | - | - |

If the user elects not to add and/or modify one or more event codes at step 1480, or after step 1490, process flow loops back to step 1450 where the user may elect whether to continue with the process of changing the setup data associated with the emergency alert function, or end the process.

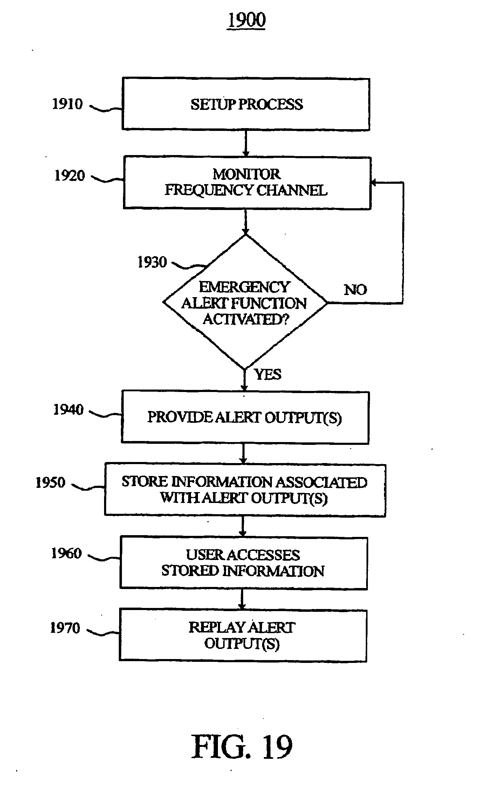

Turning now to FIG. 19, a flowchart 1900 illustrating exemplary steps according to another aspect of the present invention is shown. In particular, FIG. 19 illustrates an aspect of the present invention in which information associated with alert outputs may be stored and later retrieved by a user. This aspect of the present invention may for example enable a user returning from an out-of-town trip to receive accurate information about an emergency event that occurred during his/her absence. For purposes of example and explanation, the steps of FIG. 19 will also be described with reference to television signal receiver 20 of FIG. 2. Accordingly, the steps of FIG. 19 are enabled by processor 27. The steps of FIG. 19 are merely exemplary, and are not intended to limit the present invention in any manner. In FIG. 19, steps 1910 to 1940 are substantially identical to steps 310 to 340 of FIG. 3, respectively. Accordingly, for clarity of description these steps will not be described again, and the reader may refer to the description of steps 310 to 340 previously provided herein.

At step 1950, information associated with the alert output(s) provided at step 1940 is stored in memory 27. According to an exemplary embodiment, television signal receiver 20 stores header data from the SAME message which activated the emergency alert function and produced the alert output(s). Such header data may include information about the emergency event which produced the alert output(s), such as the type of event, the date and time the alert output was provided, and/or other information. This exemplary embodiment may be advantageous since the header data from the SAME message may utilize only a small portion of memory 27. According to another exemplary embodiment, the entire SAME message which produced the alert output(s) may be stored in memory 27, which may include flash memory.

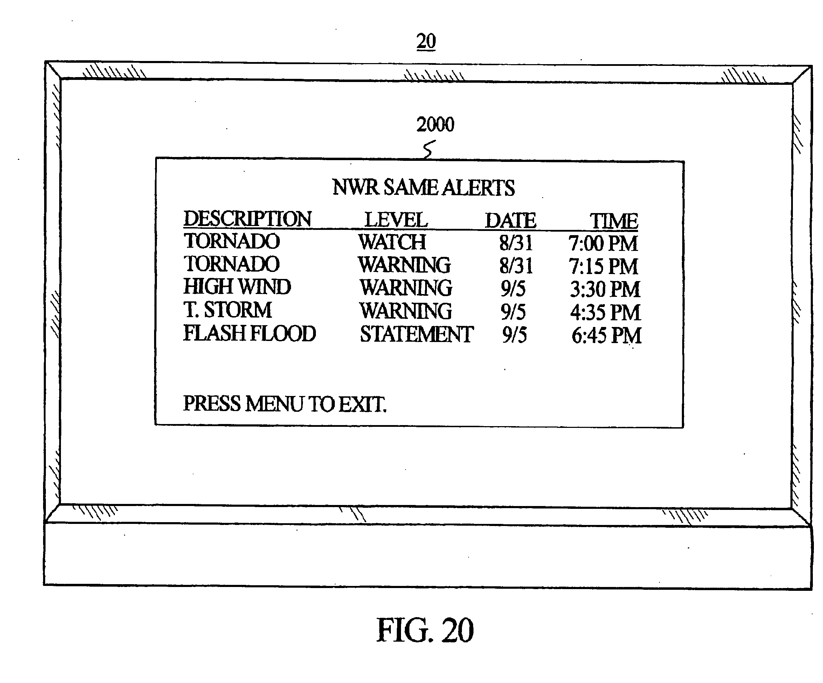

At step 1960, a user may access the information stored at step 1950. According to an exemplary embodiment, the user may access the information at step 1960 by providing inputs to television signal receiver 20 (e.g., using a remote control device, etc.) responsive to an on-screen menu displayed via display 29. Such inputs may cause the stored information associated with the alert output(s) to be retrieved from memory 27 and displayed via display 29. FIG. 20 shows an exemplary display 2000 providing such information. As indicated in FIG. 20, information such as the event type/description, the alert level, the date and time of the alert output, and/or other information may be provided for user review. According to an exemplary embodiment, television signal receiver 20 may display information associated with alert output(s) which occurred during a given time period (e.g., past several weeks, etc.), depending on the capacity of memory 27. According to another exemplary embodiment, television signal receiver 20 may allow users to delete information from display 2000, and/or may automatically delete older information to accommodate more recent information.

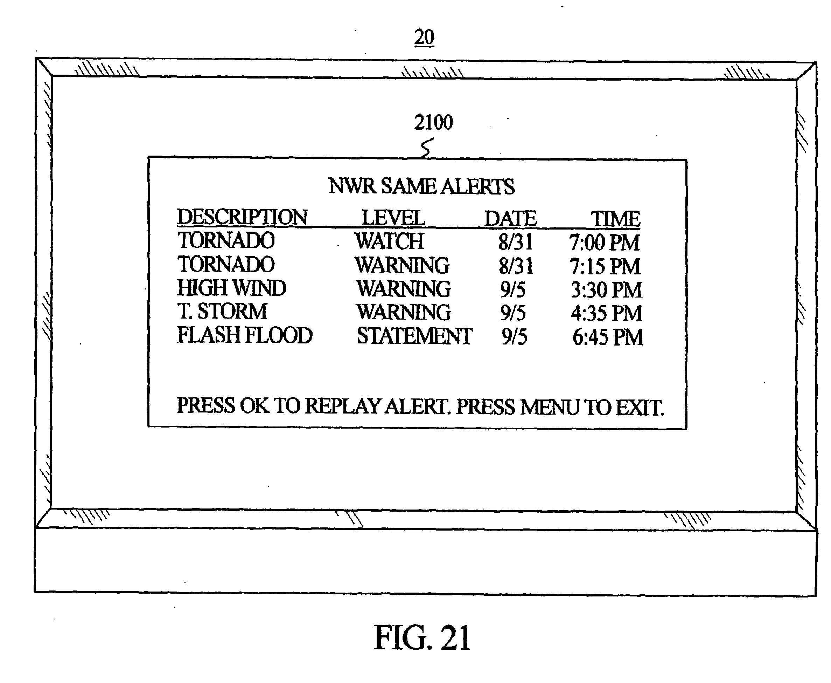

At step 1970, the user may elect to replay one or more of the alert output(s). According to an exemplary embodiment, the user may cause one or more alert outputs to be replayed at step 1970 by providing inputs to television signal receiver 20 (e.g., using a remote control device, etc.) responsive to an on-screen menu displayed via display 29. Such inputs may cause television signal receiver 20 to reproduce one or more alert outputs in the same manner in which they were originally provided (e.g., aurally and/or visually). FIG. 21 shows an exemplary display 2100 through which the user may replay one or more alert outputs at step 1970.

It should also be appreciated that the principles of the present invention reflected herein may be combined in any suitable manner. For example, any aspects of the present invention represented in flowcharts 3 to 9, 14 and 19 may be combined according to design choice.

As described herein, the present invention provides various techniques for improving the performance of apparatuses having an emergency alert function. The present invention may be applicable to various apparatuses, either with or without a display device. Accordingly, the phrase "television signal receiver" as used herein may refer to systems or apparatuses capable of receiving and processing television signals including, but not limited to, television sets, computers or monitors that include a display device, and systems or apparatuses such as set-top boxes, video cassette recorders (VCRs), digital versatile disk (DVD) players, video game boxes, personal video recorders (PVRs), computers or other apparatuses that may not include a display device.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method for controlling an apparatus (20) having an emergency alert function, comprising:
automatically tuning a plurality of frequency channels associated with said emergency alert function to identify one of said frequency channels having higher signal strength relative to said other frequency channels (310);
using said identified frequency channel to receive emergency alert signals capable of activating said emergency alert function (320);
performing a test with said identified frequency channel (410-450), wherein said test includes determining whether said identified frequency channel receives a user selected location code associated with said emergency alert function within a predetermined time period; and
providing an output message (1000-1300) responsive to said identified frequency channel failing said test.

2. The method of claim 1, wherein said test further includes measuring signal strength on said identified frequency channel.

3. The method of claim 1, wherein said predetermined time period is approximately one week.

4. The method of claim 1, further comprised of enabling a user to modify an existing location code associated with said emergency alert function (1470).

5. The method of claim 1, further comprised of enabling a user to add a new location code associated with said emergency alert function (1470).

6. The method of claim 1, further comprised of enabling a user to modify an existing event code associated with said emergency alert function (1490).

7. The method of claim 1, further comprised of enabling a user to add a new event code associated with said emergency alert function (1490).

8. The method of claim 1, further comprised of:
providing an alert output responsive to activation of said emergency alert function (1940);
storing information associated with said alert output (1950); and
enabling a user to access said information (1960).

9. The method of claim 8, further comprised of enabling said user to replay said alert output (1970).

10. An apparatus (20) having an emergency alert function, comprising:
tuning means (22) for tuning a plurality of frequency channels associated with said emergency alert function;
processing means (27) for identifying one of said frequency channels having higher signal strength relative to said other frequency channels;
wherein said tuning means (22) tunes said identified frequency channel to receive emergency alert signals capable of activating said emergency alert function; and
wherein said processing means (27) enables a test with said identified frequency channel and said test includes determining whether said identified frequency channel receives a user selected location code associated with said emergency alert function within a predetermined time period, and enables an output menage responsive to said identified frequency channel failing said test.

11. The apparatus (20) of claim 10, wherein said user selected location code is a FIPS code.

12. The apparatus (20) of claim 10, wherein said processing means (27) enables an output message responsive to said identified frequency channel failing said test.

13. The apparatus (20) of claim 10, wherein said test further includes measuring signal strength on said identified frequency channel.

14. The apparatus (20) of claim 10, wherein said predetermined time period is approximately one week.

15. The apparatus (20) of claim 10, wherein said processing means (27) enables a user to modify an existing location code associated with said emergency alert function.

16. The apparatus (20) of claim 10, wherein said processing means (27) enables a user to add a new location code associated with said emergency alert function.

17. The apparatus (20) of claim 10, wherein said processing means (27) enables a user to modify an existing event code associated with said emergency alert function.

18. The apparatus (20) of claim 10, wherein said processing means (27) enables a user to add a new event code associated with said emergency alert function.

19. The apparatus (20) of claim 10, further comprising memory means (27) for storing information associated with an alert output, and wherein said processing means (27) enables a user to access said information.

20. The apparatus (20) of claim 19, wherein said processing means (27) enables said user to replay said alert output.

## Patentansprüche

1. Verfahren zum Steuern einer Vorrichtung (20) mit einer Notfallalarm-Funktion, wobei das Verfahren umfasst:
automatisches Abstimmen mehrerer der Notfallalarm-Funktion zugeordneter Frequenzkanäle, um einen der Frequenzkanäle mit einer höheren Signalstärke relativ zu den anderen Frequenzkanälen (310)zu identifizieren;
Verwenden des identifizierten Frequenzkanals zum Empfangen von Notfallalarm-Signalen, die die Notfallalarm-Funktion (320) aktivieren können;
Ausführen eines Tests mit dem identifizierten Frequenzkanal (410-450), wobei der Test das Bestimmen enthält, ob der identifizierte Frequenzkanal innerhalb einer vorgegebenen Zeitdauer einen der Notfallalarm-Funktion zugeordneten vom Anwender gewählten Ortscode empfängt; und
Liefern einer Ausgabenachricht(1000-1300) in Reaktion darauf, dass der identifizierte Frequenzkanal den Test nicht besteht.

2. Verfahren nach Anspruch 1, bei dem der Test ferner das Messen der Signalstärke auf dem identifizierten Frequenzkanal enthält.

3. Verfahren nach Anspruch 1, bei dem die vorgegebene Zeitdauer näherungsweise eine Woche ist.

4. Verfahren nach Anspruch 1, das ferner das Ermöglichen umfasst, dass ein Anwender einen vorhandenen der Notfallalarm-Funktion (1470) zugeordneten Ortscode ändert.

5. Verfahren nach Anspruch 1, das ferner das Ermöglichen umfasst, dass ein Anwender einen neuen der Notfallalarm-Funktion (1470) zugeordneten Ortscode hinzufügt.

6. Verfahren nach Anspruch 1, das ferner das Ermöglichen umfasst, dass ein Anwender einen vorhandenen der Notfallalarm-Funktion (1490) zugeordneten Ereigniscode ändert.

7. Verfahren nach Anspruch 1, das ferner das Ermöglichen umfasst, dass ein Anwender einen neuen der Notfallalarm-Funktion (1490) zugeordneten Ereigniscode hinzufügt.

8. Verfahren nach Anspruch 1, das ferner umfasst:
Liefern einer Warnungsausgabe in Reaktion auf die Aktivierung der Notfallalarm-Funktion (1940);
Speichern von der Warnungsausgabe zugeordneten Informationen (1950); und
Ermöglichen, dass ein Anwender auf die Informationen (1960) zugreift.

9. Verfahren nach Anspruch 8, das ferner das Ermöglichen umfasst, dass der Anwender die Warnungsausgabe (1970) wiederholt.

10. Vorrichtung (20) mit einer Notfallalarm-Funktion, wobei die Vorrichtung umfasst:
ein Abstimmmittel (22) zum Abstimmen mehrerer der Notfallalarm-Funktion zugeordneter Frequenzkanäle;
ein Verarbeitungsmittel (27) zum Identifizieren eines der Frequenzkanäle mit einer höheren Signalstärke relativ zu den anderen Frequenzkanälen;
wobei das Abstimmmittel (22) den identifizierten Frequenzkanal abstimmt, um Notfallalarm-Signale zu empfangen, die die Notfallalarm-Funktion aktivieren können; und
wobei das Verarbeitungsmittel (27) einen Test mit dem identifizierten Frequenzkanal ermöglicht und der Test das Bestimmen enthält, ob der identifizierte Frequenzkanal innerhalb einer vorgegebenen Zeitdauer einen der Notfallalarm-Funktion zugeordneten vom Anwender gewählten Ortscode empfängt, und in Reaktion darauf, dass der identifizierte Frequenzkanal den Test nicht besteht, eine Ausgabenachricht freigibt.

11. Vorrichtung (20) nach Anspruch 10, bei der der vom Anwender gewählte Ortscode ein FIPS-Code ist.

12. Vorrichtung (20) nach Anspruch 10, bei der das Verarbeitungsmittel (27) in Reaktion darauf, dass der identifizierte Frequenzkanal den Test nicht besteht, eine Ausgabenachricht freigibt.

13. Vorrichtung (20) nach Anspruch 10, bei der der Test ferner das Messen der Signalstärke auf dem identifizierten Frequenzkanal enthält.

14. Vorrichtung (20) nach Anspruch 10, bei der die vorgegebene Zeitdauer näherungsweise eine Woche ist.

15. Vorrichtung (20) nach Anspruch 10, bei der das Verarbeitungsmittel (27) ermöglicht, dass ein Anwender einen vorhandenen der Notfallalarm-Funktion zugeordneten Ortscode ändert.

16. Vorrichtung (20) nach Anspruch 10, bei der das Verarbeitungsmittel (27) ermöglicht, dass ein Anwender einen neuen der Notfallalarm-Funktion zugeordneten Ortscode hinzufügt.

17. Vorrichtung (20) nach Anspruch 10, bei der das Verarbeitungsmittel (27) ermöglicht, dass ein Anwender einen vorhandenen der Notfallalarm-Funktion zugeordneten Ereigniscode ändert.

18. Vorrichtung (20) nach Anspruch 10, bei der das Verarbeitungsmittel (27) ermöglicht, dass ein Anwender einen neuen der Notfallalarm-Funktion zugeordneten Ereigniscode hinzufügt.

19. Vorrichtung (20) nach Anspruch 10, die ferner ein Speichermittel (27) zum Speichern von einer Warnungsausgabe zugeordneten Informationen umfasst und bei der das Verarbeitungsmittel (27) ermöglicht, dass ein Anwender auf die Informationen zugreift.

20. Vorrichtung (20) nach Anspruch 19, bei der das Verarbeitungsmittel (27) ermöglicht, dass der Anwender die Warnungsausgabe wiederholt.

## Revendications

1. Procédé de commande d'un appareil (20) possédant une fonction d'alerte, comprenant :
la syntonisation automatique d'une pluralité de canaux de fréquences associés à ladite fonction d'alerte pour identifier un desdits canaux de fréquences possédant une intensité de signal supérieure par rapport auxdits autres canaux de fréquence (310) ;
l'utilisation dudit canal de fréquences identifié pour recevoir des signaux d'alerte capables d'activer ladite fonction d'alerte (320) ;
la réalisation d'un test avec ledit canal de fréquences identifié (410-450), où ledit test inclut la détermination si ledit canal de fréquences identifié reçoit un code d'emplacement sélectionné par l'utilisateur, associé à ladite fonction d'alerte lors d'une période prédéterminée ; et
l'émission d'un message de sortie (1000-1300) en réponse audit test échoué dudit canal de fréquences identifié.

2. Procédé selon la revendication 1, où ledit test inclut en outre la mesure de l'intensité de signal sur ledit canal de fréquences identifié.

3. Procédé selon la revendication 1, où ladite période prédéterminée est d'environ une semaine.

4. Procédé selon la revendication 1, comprenant en outre le fait de permettre à un utilisateur de modifier un code d'emplacement existant associé à ladite fonction d'alerte (1470).

5. Procédé selon la revendication 1, comprenant en outre le fait de permettre à un utilisateur d'ajouter un nouveau code d'emplacement associé à ladite fonction d'alerte (1470).

6. Procédé selon la revendication 1, comprenant en outre le fait de permettre à un utilisateur de modifier un code d'événement existant associé à ladite fonction d'alerte (1490).

7. Procédé selon la revendication 1, comprenant en outre le fait de permettre à un utilisateur d'ajouter un nouveau code d'événement associé à ladite fonction d'alerte (1490).

8. Procédé selon la revendication 1, comprenant en outre :
l'émission d'une sortie d'alerte en réponse à l'activation de ladite fonction d'alerte (1940) ;
le stockage d'informations associées à ladite sortie d'alerte (1950) ; et
le fait de permettre à un utilisateur d'accéder auxdites informations (1960).

9. Procédé selon la revendication 8, comprenant en outre le fait de permettre audit utilisateur de relire ladite sortie d'alerte (1970).

10. Appareil (20) possédant une fonction d'alerte, comprenant :
un moyen de syntonisation (22) pour syntoniser une pluralité de canaux de fréquence associés à ladite fonction d'alerte ;
un moyen de traitement (27) pour identifier un desdits canaux de fréquences possédant une intensité de signal supérieure par rapport auxdits autres canaux de fréquences ;
où ledit moyen de syntonisation (22) syntonise ledit canal de fréquences identifié pour recevoir des signaux d'alerte capables d'activer ladite fonction d'alerte ; et
où ledit moyen de traitement (27) active un test avec ledit canal de fréquences identifié et ledit test inclut la détermination si ledit canal de fréquences identifié reçoit un code d'emplacement sélectionné par l'utilisateur, associé à ladite fonction d'alerte lors d'une période prédéterminée, et active un message de sortie en réponse audit test échoué dudit canal de fréquences identifié.

11. Appareil (20) selon la revendication 10, où ledit code d'emplacement sélectionné par l'utilisateur est un code FIPS.

12. Appareil (20) selon la revendication 10, où ledit moyen de traitement (27) active un message de sortie en réponse audit test échoué dudit canal de fréquences identifié.

13. Appareil (20) selon la revendication 10, où ledit test inclut en outre la mesure de l'intensité de signal sur ledit canal de fréquences identifié.

14. Appareil (20) selon la revendication 10, où ladite période prédéterminée est d'environ une semaine.

15. Appareil (20) selon la revendication 10, où ledit moyen de traitement (27) permet à un utilisateur de modifier un code d'emplacement existant associé à ladite fonction d'alerte.

16. Appareil (20) selon la revendication 10, où ledit moyen de traitement (27) permet à un utilisateur d'ajouter un nouveau code d'emplacement associé à ladite fonction d'alerte.

17. Appareil (20) selon la revendication 10, où ledit moyen de traitement (27) permet à un utilisateur de modifier un code d'événement existant associé à ladite fonction d'alerte.

18. Appareil (20) selon la revendication 10, où ledit moyen de traitement (27) permet à un utilisateur d'ajouter un nouveau code d'événement associé à ladite fonction d'alerte.

19. Appareil (20) selon la revendication 10, comprenant en outre un moyen de mémoire (27) pour stocker des informations associés à une sortie d'alerte, et où ledit moyen de traitement (27) permet à un utilisateur d'accéder auxdites informations.

20. Appareil (20) selon la revendication 19, où ledit moyen de traitement (27) permet audit utilisateur de relire ladite sortie d'alerte.
